# DEMANDE DE BREVET EUROPEEN

(11) **EP 0 587 497 A1**
(43) Date de publication de la demande: **16.03.1994**
(21) Numéro de dépôt: 93402186.6
(22) Date de dépôt: 08.09.1993
(51) Int. Cl.: H01R 13/703, H01R 23/70

(54) **Connecteur électrique pour carte à microcircuit**

(30) Priorité: 09.09.1992 FR 9210765
(71) Demandeur: FRAMATOME CONNECTORS INTERNATIONAL, 92084 Paris La Défense (FR)
(72) Inventeur: Casses, Claude, F-28300 Clevilliers (FR)
(74) Mandataire: Fort, Jacques

(57) **Abrégé**

Le connecteur comporte un plateau d'appui (14) de la grande face opposée à celle qui porte les plages et définissant un trajet d'introduction de la carte dans une direction déterminée et comportant un microcommutateur (20) de fin de course actionnable par la tranche avant de la carte (10) lorsque cette dernière atteint une position déterminée. Il a de plus un basculeur tournant sur le commutateur autour d'un axe orthogonal à la direction d'introduction de la carte (10), parallèle au plan d'appui sur le plateau et écarté du plan d'appui, présentant à l'opposé de l'axe (26) de rotation un doigt (32) d'appui de la tranche avant de la carte et présentant une saillie de commande du microrupteur (20).

## Description

La présente invention concerne les connecteurs électriques de réception de carte à microcircuit ayant des plages de contact électrique sur une grande face et plus particulièrement les connecteurs du type comportant un plateau d'appui de la grande face de la carte opposée à celle qui porte les plages et définissant un trajet d'introduction de la carte dans une direction déterminée et comportant un microcommutateur de fin de course actionnable par la tranche avant de la carte lorsque cette dernière atteint une position déterminée.

On connaît déjà de nombreux connecteurs de ce genre. Le microcommutateur doit se fermer lorsque la carte occupe une position dans laquelle ses plages sont à coup sûr en liaison avec des lames élastiques conductrices portées par un boîtier auquel appartient le plateau, de façon à donner un signal autorisant l'échange d'information entre la carte et des circuits reliés au connecteur. Dans la pratique, le microcommutateur doit se fermer lorsque la carte parcourt les cinq derniers dixièmes de millimètre de sa course nominale, avant d'arriver dans une position de butée. Par ailleurs, cette précision élevée doit être obtenue en ne mettant oeuvre que des moyens simples.

Les connecteurs actuels ne remplissent qu'imparfaitement cette condition ; pour la plupart ils utilisent des moyens de commande du microcommutateur par la carte qui sont influencés par l'épaisseur de cette dernière, qui peut varier dans des proportions relativement considérables, supérieures à 10 %.

La présente invention vise à fournir un connecteur électrique du genre ci-dessus défini, constitué de façon à rendre sans effet les tolérances d'épaisseur sur la carte, et cela en ne mettant cependant en oeuvre que des moyens simples.

Dans ce but, l'invention propose notamment un connecteur caractérisé par un basculeur tournant sur le commutateur autour d'un axe orthogonal à la direction d'introduction de la carte, parallèle au plan d'appui et écarté de ce plan d'appui, présentant à l'opposé de l'axe de rotation un doigt d'appui de la tranche avant de la carte et présentant une saillie de commande du microcommutateur par déplacement orthogonal au plateau d'appui.

Grâce à cette disposition, c'est toujours la position de la tranche avant de la carte, et elle seule, qui intervient pour fixer la position du basculeur. On élimine ainsi toutes les imprécisions liées aux tolérances d'épaisseur de la carte.

Le basculeur peut notamment avoir une forme d'étrier ayant deux branches d'articulation encadrant le microcommutateur, dirigées sensiblement parallèlement au doigt d'appui de la tranche. Ce doigt peut être placé de façon à être sensiblement orthogonal à la direction de la carte en fin d'introduction de cette dernière.

Le microcommutateur peut être de l'un quelconque des types bien connus, notamment à coupelle bombée dite "cloquable". Le basculeur peut être placé de façon que l'élasticité de la coupelle maintienne le doigt d'appui sur le trajet d'introduction de la carte. La longueur du doigt est suffisante pour qu'il n'échappe pas à la tranche de la carte, même lorsque cette dernière a l'épaisseur minimale prévue par les tolérances de fabrication, lorsque la carte arrive en butée. La partie terminale du basculeur, et notamment le doigt, peut être suffisamment souple pour que l'on puisse, en cas de nécessité, dégager le trajet d'introduction de la carte en repoussant les objets éventuels à l'aide d'une lame, par dessus le doigt, en obligeant ce dernier à fléchir.

La carte peut être maintenue contre le plateau d'appui, au cours de l'introduction, par les lames métalliques qui sont de toute façon nécessaires pour assurer la liaison avec des circuits extérieurs.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est une vue schématique, en coupe suivant un plan parallèle à la direction d'introduction de la carte et orthogonal au plan d'appui de la carte, montrant la disposition relative des éléments appartenant à l'invention, lorsque la carte arrive juste en contact avec le basculeur du connecteur ;
- les figures 2 et 3, similaires à la figure 1, montrent la disposition du basculeur, lorsque la carte arrive dans la position la plus reculée pour laquelle il puisse y avoir fermeture du microcommutateur et lorsque la carte arrive en butée.

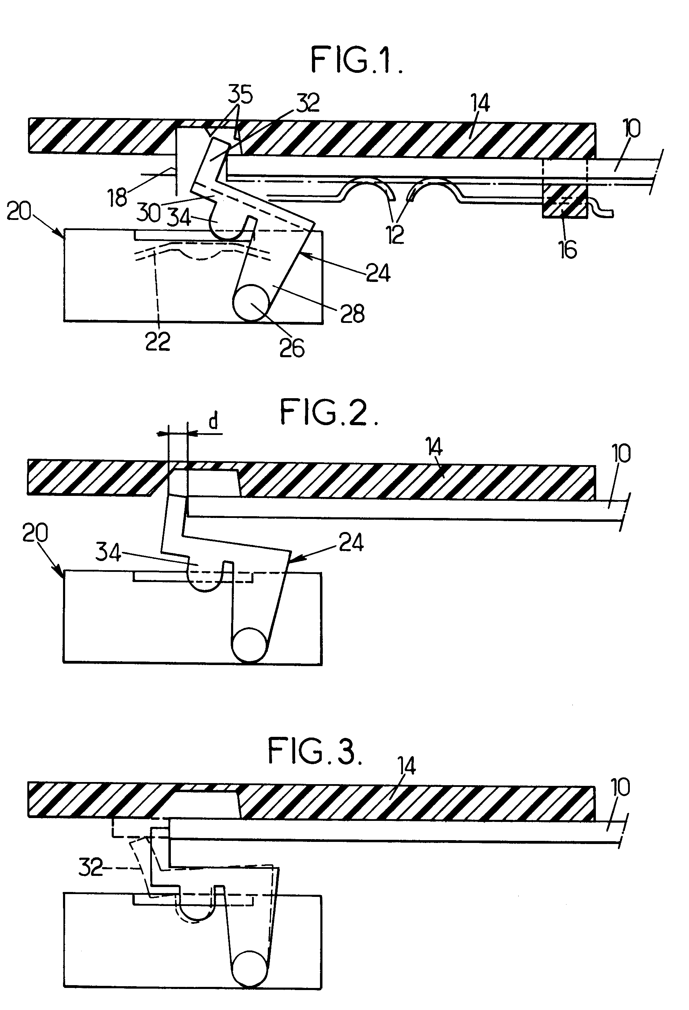

On ne décrira pas la constitution générale du connecteur, car elle peut être l'une quelconque des constitutions bien connues permettant de guider une carte 10 suivant un trajet d'introduction qui permet à des plages de contact qu'elle porte de venir en liaison électrique avec des lames conductrices 12. De tels connecteurs comportent un boîtier. La figure 1 montre uniquement un plateau supérieur 14 de ce boîtier, présentant une surface inférieure d'appui de la carte 10 définissant son trajet d'introduction avec des rainures latérales non réprésentées. Des plots isolants 16 appartenant au boîtier portent les lames 12, terminées par des boucles évitant l'accrochage de la carte 10 lors de son introduction. Ces lames 12, en feuillard de bronze par exemple, sont soumises à une précontrainte suffisante pour qu'elles maintiennent la carte 10 en appui contre le plateau 14 lors de l'introduction de la carte. Des surfaces de butée 18 limitent le déplacement de cette dernière vers l'avant.

Comme on l'a indiqué plus haut, l'épaisseur de la carte 10 n'est pas définie avec une précision élevée. La figure 1 montre, en traits pleins, une carte d'épaisseur minimale, en traits mixtes, une carte d'épaisseur maximale.

Le boîtier porte un microcommutateur 20, fixé par des moyens quelconques, éventuellement même surmoulé. Ce microcommutateur peut avoir diverses constitutions. On utilisera souvent un micrommutateur ayant un boîtier muni de pattes de raccordement, présentant une ouverture d'accès à un organe mobile ou déformable 22, qui est par exemple un disque cloquable. Ce disque est capable de se déformer, sous l'action d'une force dirigée vers le bas dans le cas de la figure 1, à partir de la position où il est représenté, et de relier alors ensemble des contacts du boîtier.

Un mécanisme de commande, destiné à s'interposer entre la carte 10 et le microcommutateur 20, comporte un basculeur 24 destiné à tourner sur le boîtier du microcommutateur autour d'un axe 26 parallèle au plan d'appui défini par le plateau 14, orthogonal à la direction d'introduction de la carte. L'éloignement de l'axe 26 et la forme du basculeur 24 sont prévus de façon que seule la tranche avant de la carte intervienne dans le déplacement du basculeur 24. Ce dernier peut présenter une forme d'étrier ayant deux bras 28 qui encadrent le boîtier du microcommutateur 20, une traverse 30 perpendiculaire aux bras et enfin un doigt 32 d'appui de la tranche avant de la carte 10. La traverse 30 présente une saillie 34 située dans une direction opposée à celle du doigt 32, destinée à s'appuyer contre le disque 22 du microcommutateur 20.

Bien que le basculeur 24 puisse être constitué en métal, il sera généralement constitué en matière plastique, par exemple en polyamide moulé non chargé.

Les déplacements au cours de l'introduction de la carte sont alors les suivants.

La tranche de la carte arrive en appui contre le doigt 32 du basculeur 24, alors que ce dernier est maintenu par le disque 22, avant d'atteindre le début de la fraction de sa course pour laquelle il doit y avoir fermeture du microcommutateur. Au fur et à mesure que la carte 10 poursuit son avance, le basculeur 24 tourne et la saillie 34 enfonce progressivement l'élément mobile ou déformable du microcommutateur 20. Ce dernier et le basculeur 24 sont placé de façon que le microcommutateur ne puisse se fermer que lorsque la distance d entre la tranche de la carte et sa position de butée est inférieure à une valeur déterminée, par exemple 0,5 mm. La course correspondante de la saillie 34 est par exemple 0,3 mm. La carte peut encore poursuivre sa course jusqu'à la position de butée, en provoquant par exemple un enfoncement supplémentaire de 0,5 mm de l'élément mobile ou déformable.

Le doigt peut être constitué de façon telle qu'il puisse se déformer comme indiqué en tirets sur la figure 3 lorsqu'il est soumis à une force dépassant celle qu'on exerce normalement au moyen de la carte 10. Cela permet par exemple de faire disparaître un bourrage dû à l'introduction d'un fragment de carte ou de carton en repoussant ce fragment par dessus le doigt 32, à condition que soit prévue une ouverture ou un volume de réception au-delà du microcommutateur.

Pour que le doigt 32 puisse avoir une dimension suffisante pour ne pas échapper à la carte, même lorsque cette dernière a une épaisseur minimale, un évidement doit être prévu pour le recevoir lorsqu'il est dans la position de repos montré en figure 1. Cet évidement peut être un simple trou borgne 35 ménagé, par exemple par moulage, dans le plateau 14 qui est généralement en matière synthétique.

L'invention ne se limite pas au mode particulier de réalisation donné à titre d'exemple et il doit être entendu qu'elle s'étend à toute variante restant dans le cadre des équivalences.

## Revendications

1. Connecteur électrique de réception d'une carte à microcircuit (10) ayant des plages de contact électrique sur une grande face, ledit connecteur comportant un plateau d'appui (14) de la grande face opposée à celle qui porte les plages et définissant un trajet d'introduction de la carte dans une direction déterminée et comportant un microcommutateur (20) de fin de course actionnable par la tranche avant de la carte (10) lorsque cette dernière atteint une position déterminée,
caractérisé par un basculeur (24) tournant sur le commutateur autour d'un axe orthogonal à la direction d'introduction de la carte (10), parallèle au plan d'appui sur le plateau et écarté du plan d'appui, présentant à l'opposé de l'axe (26) de rotation un doigt (32) d'appui de la tranche avant de la carte et présentant une saillie de commande du microcommutateur(20).

2. Connecteur selon la revendication 1, caractérisé en ce que le basculeur a une forme d'étrier ayant des branches d'articulation encadrant le microcommutateur (20) et sensiblement parallèles au doigt d'appui (32).

3. Connecteur selon la revendication 1 ou 2, caractérisé en ce que le doigt d'appui est placé de façon à être sensiblement orthogonal à la direction d'introduction de la carte en fin de course de cette dernière.

4. Connecteur selon la revendication 1, 2 ou 3, caractérisé en ce que le plateau d'appui comporte un évidement (35) de réception du doigt dans la position où il est refoulé par un élément déplaçable ou déformable appartenant au microcommutateur.

5. Commutateur selon l'une quelconque des revendications précédentes, caractérisé en ce que le plateau (14) appartient à un boîtier qui porte des lames élastiques (12) de contact avec les plages et d'appui de la carte contre le plateau (14).

6. Commutateur selon l'une quelconque des revendications précédentes, caractérisé en ce que le doigt (32) présente une flexibilité suffisante lui permettant de forcer un fragment au-delà.
